# EUROPEAN PATENT APPLICATION

(11) **EP 4 617 106 A1**
(43) Date of publication of application: **17.09.2025**
(21) Application number: 24162745.4
(22) Date of filing: 11.03.2024
(51) Int. Cl.: B60L 53/30

(54) **A COMMUNICATIONS INTERFACE, A COMMUNICATIONS SYSTEM AND A MARINE VESSEL**

(71) Applicant: Volvo Penta Corporation, 405 08 Göteborg (SE)
(72) Inventor: LANNETOFT, Simon, 461 94 Trollhättan (SE); HULTMAN ERICSON, Gabriel, 412 85 Göteborg (SE)
(74) Representative: Valea AB

(57) **Abstract**

A communications interface (1) for relaying communications signals to and from an on-board combined charging system (CCS) (3) comprising a connecting node (10), an interface circuit (12, 12', 12"), and a galvanic isolation device (14). The interface circuit (12) and the galvanic isolation device (14) are electrically connected in parallel to the connecting node (10), the connecting node is further configured to be communicatively connected to an onshore combined charging system (CCS) (3') via an on-board connector (16). The galvanic isolation device (14) is further configured to be communicatively connected to a control circuit (18, 18', 18") of a communications system (2) of the on-board combined charging system (CCS) (3) such that the control circuit (18, 18', 18") of the communications system (2) is galvanically isolated from both the interface circuit (12) and the connecting node (10) by the galvanic isolation device (14). The disclosure further relates to communication system (2) an on-board combined charging system (3) and a marine vessel (4).

## Description

### TECHNICAL FIELD

The disclosure relates generally to systems for charging of an electric energy storage. In particular aspects, the disclosure relates to a communications interface, a communications system and a marine vessel. The disclosure can be applied to marine vessels. The disclosure is not restricted to any particular marine vessel but is particularly useful for marine vessels provided with a corrosion protection arrangement.

### BACKGROUND

A combined charging system (CCS) is a standard for charging electric vehicles, especially land vehicles. Communication signals are used to control charging using a CCS. A charging interface between a charger and the vehicle or vessel to be charged comprises a number of communication lines for monitoring and controlling the charging procedure.

The communication lines comprise at least a control pilot (CP) line, a proximity pilot (PP) line and a protective earth (PE) line. The CP line provides bi-directional communications between the electric vehicle and the charging system. The PP line is used to prevent movement while the electric vehicle is connected to electric vehicle supply equipment (EVSE). The CP line may also check the maximum amount of current that the electric vehicle is able to take at any one time. The PE line is electrically grounded on the EVSE side, which also means that an electric land vehicle is grounded. It is also used as a reference line for CP and PP.

A basic requirement to start charging using a CCS is that the PE signal of the EVSE matches a ground signal received from an electronic control unit of the electric vehicle.

### SUMMARY

According to a first aspect of the disclosure, there is provided a communications interface for relaying communications signals to and from an on-board combined charging system (CCS). The communications interface is configured to be electrically connectable between an on-shore combined charging system (CCS) and the on-board combined charging system (CCS). The communications interface comprises a connecting node, an interface circuit, and a galvanic isolation device.

The interface circuit and the galvanic isolation device are electrically connected in parallel to the connecting node. The connecting node is further configured to be communicatively connected to the on-shore combined charging system (CCS) via an on-board connector.

The galvanic isolation device is further configured to be communicatively connected to a control circuit of a communications system of the on-board combined charging system (CCS) such that the control circuit of the communications system is galvanically isolated from both the interface circuit and the connecting node by the galvanic isolation device.

The first aspect of the disclosure may seek to provide the on-shore combined charging system (CCS) with communications signals that fulfil the requirements to allow charging of a propulsion electric energy storage system to be carried out. This is done by galvanically isolating the control circuit of the communications system of the on-board combined charging system (CCS). Thereby, the control signals from the on-shore CCS are received by the interface circuit and the control circuit. However, the control signals received by the control circuit are galvanically isolated from the on-shore CCS. The return signals are only received by the on-shore CCS from the interface circuit. Accordingly, the control signals will have a ground return path and the ground reference control signal (protected earth (PE)) will be equal to a ground reference of the marine vessel's control unit. In other words, there is a first loop of electric current from the on-shore CCS to the interface circuit and back to the on-shore CCS. A second loop begins in the interface circuit, at the galvanic isolation device, to the control circuit (which may be comprised in a charging control unit) and back to the galvanic isolation device.

The connecting node is configured to be electrically connected to an on-board connector, which may in turn be connected to a connector of the on-shore CCS. Such connectors comprise pins for the control signals, such as for a control pilot (CP) line, a proximity pilot (PP) line and for a protective earth (PE) line.

That the interface circuit and the galvanic isolation device are electrically connected in parallel to the connecting node has the effect that a voltage/electric potential of a control signal generated by the on-shore CCS will be applied equally to the interface circuit and to a control circuit connected to the galvanic isolation device. Therefore, a response (monitored voltage) from the voltage applied to the interface circuit will mimic a response to the voltage applied to the control circuit. Thus, if a control unit of the marine vessel, comprising the on-board CCS, applies a status change to the control circuit, such as the opening or closing of a switch of the control circuit, which may be due to a detected ready-state of an electric energy storage system, indicating readiness of the system to begin charging, a corresponding identical switch may be opened or closed by the control unit in the interface circuit such that a response from the control circuit, expected by the on-shore CCS, is instead replaced by a response from the interface circuit, but interpreted by the on-shore CCS as a response form the control circuit of the on-board CCS.

Consequently, a marine vessel, provided with a corrosion protection arrangement, which arrangement would normally interrupt control signals and cause the control circuit to fail to provide the response required to e.g. allow charging to start, may by the present disclosure be provided with an interface circuit which translates the interrupted response of the control circuit into an allowable/recognizable response by the interface circuit.

The term "communicatively connected" is herein intended to mean that at least two components are connected for communication, but they are not necessarily electrically connected. They may be galvanically isolated from each other. Such communication between galvanically isolated components may for instance be performed by inductive or optical coupling.

The term "electrically connected" is herein to be understood as two components which are galvanically connected to each other. Electrically connected components may at the same time be communicatively connected.

Optionally in some examples, including in at least one preferred example, the interface circuit comprises at least a proximity pilot (PP) signal-specific interface circuit and/or a control pilot (CP) signal-specific interface circuit. The proximity pilot (PP) signal-specific interface circuit is configured to be connected in parallel with a proximity pilot (PP) signal-specific control circuit of the communications system via the galvanic isolation device. The control pilot (CP) signal-specific interface circuit is configured to be connected in parallel with a control pilot (CP) signal-specific control circuit of the communications system via the galvanic isolation device.

As mentioned hereinbefore, the CP signals provide bi-directional communication between the marine vessel and the charging system. The PP signals are used to prevent movement while the marine vessel is connected to electric vehicle supply equipment (EVSE). The CP control circuitry may also check the maximum amount of current that the marine vessel is able to take at any one time. The PE circuitry is electrically grounded, which also means that an electric land vehicle is grounded. It is also used as a reference line for CP and PP. In the context of the present disclosure, any PP signal-specific control circuit and/or CP signal-specific control circuit of the control circuit is replicated by a PP signal-specific interface circuit and a CP signal-specific interface circuit, respectively. The parallel coupling allows the on-shore CCS to monitor a status of the PP and CP control signals of the charging system via the interface circuit instead of via the conventional control circuit.

Optionally in some examples, including in at least one preferred example, each of the proximity pilot (PP) signal-specific interface circuit, the control pilot (CP) signal-specific interface circuit, the proximity pilot (PP) signal-specific control circuit and the control pilot (CP) signal-specific control circuit comprises a protected earth (PE) reference circuit. Accordingly, also the PE signal may be monitored via the interface circuit.

Optionally in some examples, including in at least one preferred example, the PP signal-specific interface circuit is configured to be schematically identical to the proximity pilot (PP) signal-specific control circuit. The control pilot (CP) signal-specific interface circuit is configured to be schematically identical to the control pilot (CP) signal-specific control circuit. The interface circuit is configured to schematically copy the control circuit. The term "control circuit" should herein be understood to mean at least one standardized circuit of a communications system of an on-board CCS. For the purposes of this disclosure, the at least one standardized control circuit relates to a circuit for the control pilot (CP) signal and/or the proximity pilot (PP) signal. Each of the CP and PP signals has its respective control circuit. Both the CP and the PP signal-specific control circuits are provided with a protected earth (PE) reference circuit. In an on-board CCS, other control circuits may be provided, but the control circuits discussed herein only relate to the PP, CP and PE control circuits. Since the PP, CP and PE control circuits of a CCS are standardized circuits which have a pre-determined configuration, they may be schematically copied to make up the interface circuit.

Optionally in some examples, including in at least one preferred example, the proximity pilot (PP) signal-specific interface circuit, the control pilot (CP) signal-specific interface circuit, the proximity pilot (PP) signal-specific control circuit and the control pilot (CP) signal-specific control circuit, are configured to be connected to, and controllable by a charging control unit. Thereby, the control unit may monitor and control the interface circuit and the control circuit similarly, such that a change of a status of a component in the control circuit produces an identical change of status in a corresponding component in the interface circuit.

According to a second aspect of the disclosure, there is provided an on-board communications system for an on-board combined charging system (CCS) of a marine vessel, for charging of a propulsion electric energy storage system. The on-board communications system comprises an on-board connector for connecting to an on-shore combined charging system (CCS). The communications system further comprises the communications interface of any one of the examples of the first aspect of the disclosure, a control circuit communicatively connected to the galvanic isolation device of the communication interface, a charging control unit, and a DC electric energy storage system.

The connecting node of the communications interface is further configured to be communicatively connected to an on-shore combined charging system (CCS) via the on-board connector. The interface circuit and the control circuit are communicatively connected to the connecting node in parallel, and the galvanic isolation device is connected in series with the control circuit, between the connecting node and the control circuit, galvanically isolating the control circuit from the interface circuit, the connecting node and the on-board connector.

The charging control unit may be an electronic control unit (ECU) of the vessel. The charging control unit may comprise the control circuit.

The DC electric energy storage system may be 24 volts or 12 volts battery for powering consumers of low-voltage electric power, such as the charging control unit. The DC electric energy storage system is different from a propulsion electric energy storage system. The DC electric energy storage system is electrically connected to the charging control unit, which communicates the PP, CP and PE control signals with the on-shore CCS. The control signals use ground (GND) of the DC electric energy storage system as a reference for the control signals. Therefore, ground needs to be connected to the PE control signal. As mentioned hereinabove, such a connection may cause problems in marine applications because of the existence of corrosion protection arrangements, which either obstructs the CP and PP control signals' return path, or which causes the PE control signal to differ from the ground (GND) signal of the DC electric energy storage system.

Technical effects and advantages of features of the first aspect of the disclosure apply mutatis mutandis to corresponding features of the second aspect of the disclosure.

Optionally in some examples, including in at least one preferred example, the interface circuit comprises at least a proximity pilot (PP) signal-specific interface circuit and/or a control pilot (CP) signal-specific interface circuit. The proximity pilot (PP) signal-specific interface circuit is connected in parallel with a proximity pilot (PP) signal-specific control circuit via the galvanic isolation device, and/or the control pilot (CP) signal-specific interface circuit is connected in parallel with a control pilot (CP) signal-specific control circuit via the galvanic isolation device.

Optionally in some examples, including in at least one preferred example, each of the proximity pilot (PP) signal-specific interface circuit, the control pilot (CP) signal-specific interface circuit, the proximity pilot (PP) signal-specific control circuit and the control pilot (CP) signal-specific control circuit comprises a protected earth (PE) reference circuit.

Optionally in some examples, including in at least one preferred example, the proximity pilot (PP) signal-specific interface circuit is configured to be schematically identical to the proximity pilot (PP) signal-specific control circuit, and the control pilot (CP) signal-specific interface circuit is configured to be schematically identical to the control pilot (CP) signal-specific control circuit.

Optionally in some examples, including in at least one preferred example, the proximity pilot (PP) signal-specific interface circuit, the control pilot (CP) signal-specific interface circuit, the proximity pilot (PP) signal-specific control circuit and the control pilot (CP) signal-specific control circuit, are connected to, and controllable by the charging control unit. The interface circuit is communicatively connected to, but galvanically isolated from the charging control unit by the galvanic isolation device.

Optionally in some examples, including in at least one preferred example, the charging control unit is configured to replicate a status change of the control circuit in the interface circuit. The charging control unit may be configured to monitor and control a process for charging a propulsion electric energy storage system. The charging control unit may thus monitor connections of hardware, signals, state of charge of the propulsion electric energy storage system, etc. To communicate with the on-shore CCS, the charging control unit may be configured to control components of the control circuit, such as electric switches, to indicating a change of status of the charging process by changing a status of the control circuit. In the present disclosure, a change of status implemented by the charging control unit in the control circuit is also implemented in the interface circuit by the charging control unit. Thereby, the on-shore CCS, monitoring the charging process of the on-board CCS, would detect a status change in the interface circuit coupled in parallel with the control circuit. The status change in the interface circuit would be unaffected by any corrosion protection arrangements and would provide the correct control signals (PP, CP and PE) to allow the charging process to proceed.

Optionally in some examples, including in at least one preferred example, the charging control unit is connected to, and electrically powered by the DC electric energy storage system.

According to a third aspect of the disclosure, there is provided an on-board combined charging system (CCS) for charging a propulsion electric energy storage system. The on-board combined charging system comprises the on-board communications system of any one of the examples of the second aspect of the disclosure.

Technical effects and advantages of features of the first and second aspects of the disclosure apply mutatis mutandis to corresponding features of the third aspect of the disclosure.

According to a fourth aspect of the disclosure, there is provided a marine vessel comprising the on-board combined charging system (CCS) of any one of the examples of the third aspect of the disclosure, a propulsion electric energy storage system connected to the on-board combined charging system (CCS), a corrosion protection arrangement. The present disclosure provides an interface circuit that allows conventional corrosion protection arrangement in marine vessels while at the same time allowing a combined charging system (CCS) to be used for charging a propulsion electric energy storage system of the marine vessel.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**Fig. 1** is a marine vessel according to an example.
**Fig. 2** is a communications interface according to an example.
**Fig. 3** is a communications system comprising the communications interface of Fig. 1.
**Fig. 4** is a combined charging system connected to a marine vessel lacking a corrosion protection arrangement.
**Fig. 5a** is a combined charging system connected to a marine vessel having a first type of corrosion protection arrangement.
**Fig. 5b** is an alternative coupling of the corrosion protection arrangement of **Fig. 5a****.**
**Fig. 6** is a combined charging system connected to a marine vessel having a second type of corrosion protection arrangement.
**Fig. 7** is a communications interface in the marine vessel of **Fig. 5a-5b****.**
**Fig. 8** is a communications interface in the marine vessel of **Fig. 6****.**
**Fig. 9** is an on-shore combined charging system (CCS) connected to a prior art on-board combined charging system.
**Fig. 10** is an interface circuit connected in parallel via a galvanic isolation device to an on-board control circuit according to an example.

### DETAILED DESCRIPTION

The detailed description set forth below provides information and examples of the disclosed technology with sufficient detail to enable those skilled in the art to practice the disclosure.

In marine applications, problems arise when a marine vessel is connected to an on-shore charging station. A hull of a marine vessel is often metallic and is electrically grounded to water surrounding the vessel. When the vessel is electrically connected to the on-shore charging station, a potential difference is generated between the different metals of the hull and the electric lines of the charging station. The water acts as an electrolyte, generating an electric stray current which in turn causes corrosion to the marine vessel. Marine vessels are therefore conventionally equipped with different kinds of corrosion protection arrangements to prevent stray currents that lead to corrosion. The connection between ground of the charging station and the grounded hull of the marine vessel may be provided with a galvanic isolator or an isolation transformer. Alternatively, a ground connection of a low-voltage DC electric energy storage system, such as a 24V battery, used for powering low-voltage consumers such as control units (ECU) of the marine vessel, is separated from the grounded hull.

There is a striving to introduce the standard of CCS in marine applications. However, when connecting a marine vessel to a CCS, the conventional corrosion protection arrangements mentioned hereinabove will prevent the charging process from starting because the PE signal of the on-shore charging station will differ from the ground signal received from the marine vessel, or because the CP and/or the PP signals lack a ground return path due to the corrosion protection arrangement.

An aim of the present disclosure is to provide a communications interface, a communications system and an on-board combined charging system (CCS) comprising the communications system and the communications interface, which enable marine vessels comprising conventional corrosion protection arrangements to use the combined charging systems (CCS) standard for charging of the vessel's propulsion electric or hybrid electric energy storage systems without modifying any existing corrosion protection arrangement of the vessel. The object is at least partly achieved by galvanically isolating the vessel's control circuit from an on-shore combined charging system (CCS). The control circuit, which may be comprised in a charging control unit of the vessel, comprises the proximity pilot (PP) signal-specific interface circuit, the control pilot (CP) signal-specific interface circuit (12") with respective protective earth (PE) reference circuits.

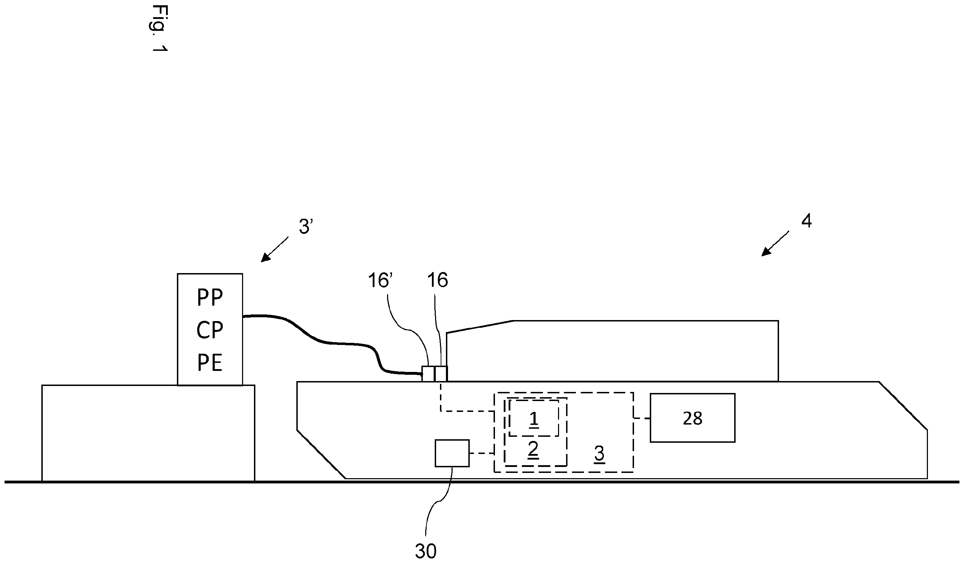

**Fig. 1** is a marine vessel 4 according to an example of the fourth aspect of the disclosure. The marine vessel 4 comprises the on-board combined charging system (CCS) 3 according to an example of the third aspect of the disclosure. The on-board combined charging system (CCS) comprises the communication system 2 according to an example of the second aspect of the disclosure. The marine vessel further comprises a propulsion electric energy storage system 28 connected to the on-board combined charging system (CCS) 3, and a corrosion protection arrangement 30. The present disclosure provides a communications interface 1, according to the first aspect of the disclosure, which allows conventional corrosion protection arrangement 30 in marine vessels 4 while at the same time allowing a combined charging system (CCS) 3, 3' to be used for charging a propulsion electric energy storage system 28 of the marine vessel 4. The communications interface 1 is comprised in the communications system 2. In **Fig. 1****,** the on-board combined charging system 3 of the marine vessel 4 is shown to be connected to the on-shore combined charging system (CCS) 3' via an on-board connector 16.

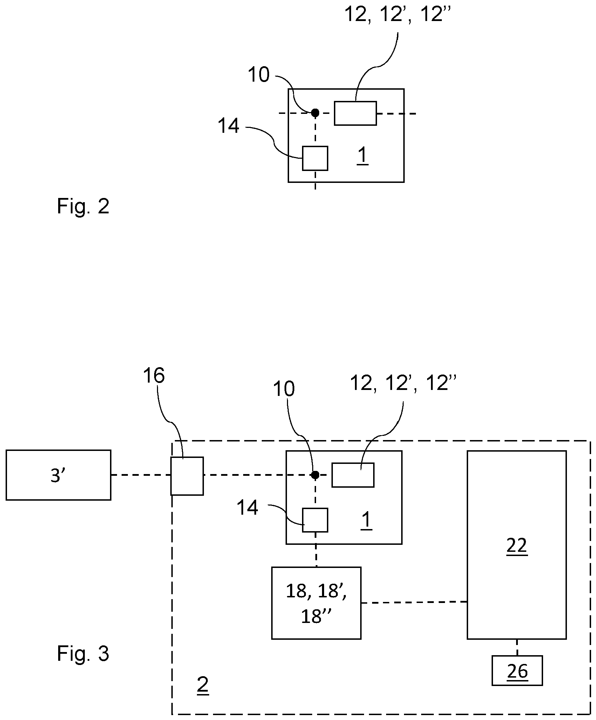

**Fig. 2** and **Fig. 3** show examples of the communications interface 1 of the first aspect of the disclosure and the communication system 2 of the second aspect of the disclosure, respectively. The communications interface 1 is adapted to relay communications signals to and from the on-board combined charging system (CCS) 3. The communications interface 1 is configured to be electrically connectable between the on-shore combined charging system (CCS) 3' and the on-board combined charging system (CCS) 3. The communications interface 1 comprises a connecting node 10, an interface circuit 12, 12', 12", and a galvanic isolation device 14.

The interface circuit 12 and the galvanic isolation device 14 are electrically connected in parallel to the connecting node 10. The connecting node 10 is further configured to be communicatively connected to the on-shore combined charging system (CCS) 3' via the on-board connector 16. The galvanic isolation device 14 is configured to be communicatively connected to a control circuit 18, 18', 18" of the communications system 2 of the on-board combined charging system (CCS) 3 such that the control circuit 18, 18', 18" of the communications system 2 is galvanically isolated from both the interface circuit 12, 12', 12" and the connecting node 10 by the galvanic isolation device 14.

By the first aspect of the disclosure, communications response signals are provided from the marine vessel 4 to the on-shore combined charging system (CCS), which communication signals fulfil the requirements to allow charging of the propulsion electric energy storage system 28 to be carried out. This is done by galvanically isolating the control circuit 18, 18', 18" of the communications system 2 of the on-board combined charging system (CCS) 3. Thereby, the control signals from the on-shore CCS 3' are received by the interface circuit and the control circuit 18, 18', 18". However, the control signals received by the control circuit 18, 18', 18" are galvanically isolated from the on-shore CCS 3'. The return signals are received by the on-shore CCS 3' from the interface circuit. Accordingly, the control signals will have a ground return path and the ground reference control signal (protected earth (PE)) will be equal to a ground reference of the marine vessel's charging control unit 22 to fulfill the control requirements of the combined charging system 3, 3'. The ground reference is the ground (GND) of a DC electric energy storage system 26 powering the charging control unit 22. In other words, there is a first loop of electric current from the on-shore CCS to the interface circuit and back to the on-shore CCS. A second loop begins in the interface circuit, at the galvanic isolation device, to the control circuit (which may be comprised in a charging control unit) and back to the galvanic isolation device.

The connecting node 10 is configured to be electrically connected to the on-board connector 16, which may in turn be connected to a connector 16' of the on-shore CCS 3'. Such connectors 16, 16' comprise pins for the control signals, such as for a control pilot (CP) line, a proximity pilot (PP) line and for a protective earth (PE) line.

That the interface circuit 12, 12', 12" and the galvanic isolation device 14 are electrically connected in parallel to the connecting node 10 has the effect that a voltage/electric potential of a control signal generated by the on-shore CCS 3' will be applied equally to the interface circuit 12, 12', 12" and to a control circuit 18, 18', 18" connected to the galvanic isolation device 14. Therefore, a response (monitored voltage) from the voltage applied to the interface circuit 12, 12', 12" will mimic a response to the voltage applied to the control circuit 18, 18', 18". Thus, if a charging control unit 22 of the marine vessel 4, comprising the on-board CCS 3, applies a status change to the control circuit 18, 18', 18", such as the opening or closing of a switch S2 of the control circuit 18, 18', 18", which may for instance be due to a detected ready-state of the propulsion electric energy storage system 28, indicating readiness of the system to begin charging, a corresponding identical switch S2', in the interface circuit 12, 12', 12", may be opened or closed by the charging control unit 22 such that a response from the control circuit 18, 18', 18", expected by the on-shore CCS 3', is instead replaced by a response from the interface circuit 12, 12', 12", but interpreted by the on-shore CCS 3' as a response form the control circuit 18, 18', 18"of the on-board CCS 3.

Consequently, a marine vessel 4, provided with a corrosion protection arrangement 30, which corrosion protection arrangement 30 would normally interrupt control signals and cause the control circuit 18, 18', 18" to fail to provide the response required to e.g. allow charging to start, may by the present disclosure be provided with an interface circuit 12, 12', 12" which translates the response of the control circuit 18, 18', 18" into an allowable/recognizable response from the interface circuit 12, 12', 12" to the on-shore combined charging system (CCS) 3'.

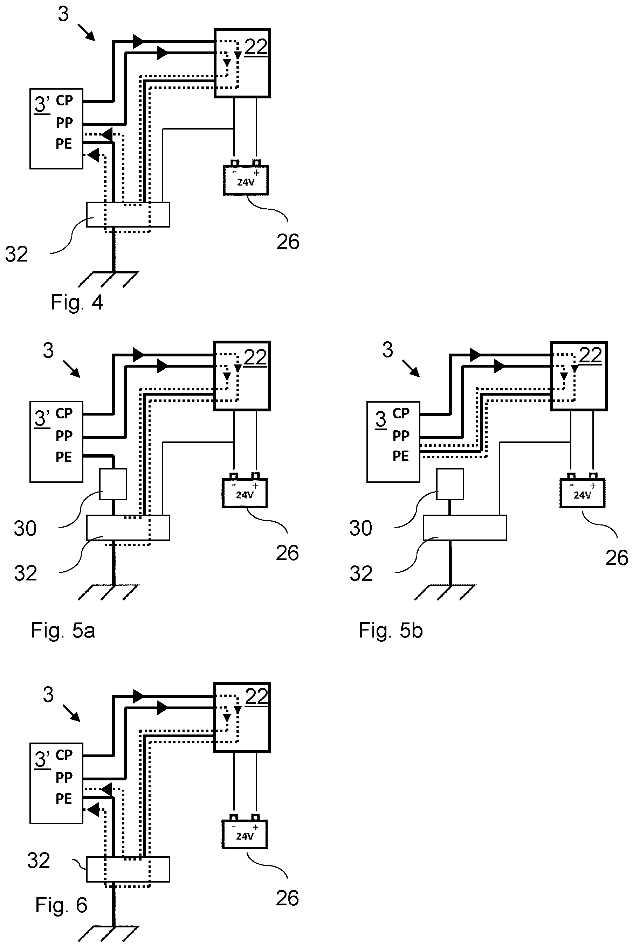

The interface circuit 12, 12', 12" may comprise at least a proximity pilot (PP) signal-specific interface circuit 12' and/or a control pilot (CP) signal-specific interface circuit 12". The proximity pilot (PP) signal-specific interface circuit 12' is configured to be connected in parallel with a proximity pilot (PP) signal-specific control circuit 18' of the communications system 2 via the galvanic isolation device 14. The control pilot (CP) signal-specific interface circuit 12" is configured to be connected in parallel with a control pilot (CP) signal-specific control circuit 18" of the communications system 2 via the galvanic isolation device 14. The latter is exemplified in **Fig. 5****.**

As mentioned hereinbefore, the CP signals provide bi-directional communication between the marine vessel 4 and the combined charging system (CCS) 3, 3'. The PP signals are used to prevent movement while the marine vessel 4 is connected to electric vehicle supply equipment (EVSE) such as the on-shore combined charging system 3'. The CP control circuitry 18" may also check the maximum amount of current that the marine vessel 4 is able to take at any one time. The PE circuitry is electrically grounded, which also means that an electric land vehicle is grounded. It is also used as a reference line for CP and PP. In the context of the present disclosure, any a PP signal-specific control circuit 18' and/or CP signal-specific control circuit of the control circuit 18" is schematically replicated by a PP signal-specific interface circuit 12' and a CP signal-specific interface circuit, respectively 12". The parallel coupling allows the on-shore CCS 3' to monitor a status of the PP and CP control signals of the combined charging system 3, 3' via the interface circuit 12, 12', 12" instead of via the conventional control circuit 18, 18', 18".

Each of the PP signal-specific interface circuit 12', the CP signal-specific interface circuit 12', the PP signal-specific control circuit 18' and the CP signal-specific control circuit 18" comprises a protected earth PE reference circuit. Accordingly, also the PE signal may be monitored via the interface circuit 12, 12', 12".

The PP signal-specific interface circuit 12' is configured to be schematically identical to the PP signal-specific control circuit 18'. The CP signal-specific interface circuit 18" is configured to be schematically identical to the CP signal-specific control circuit 12". The interface circuit 12, 12', 12" is configured to schematically copy the control circuit 18, 18', 18". The term "control circuit" 18, 18', 18" should herein be understood to mean at least one standardized control circuit 18, 18', 18" of a communications system 2 of an on-board CCS 3. For the purposes of this disclosure the at least one standardized control circuit 18, 18', 18" relates to a circuit for the control pilot (CP) signal and/or the proximity pilot (PP) signal. Each of the PP and CP signals has its respective control circuit 18', 18". Both the PP and the CP signal-specific control circuits 18', 18" are provided with a protected earth (PE) reference circuit. In an on-board CCS 3, other control circuits may be provided, but the control circuits discussed herein only relate to the PP, CP and PE control circuits. Since the PP, CP and PE control circuits of a CCS are standardized circuits which have a pre-determined configuration, they are? known and may be schematically copied to make up the interface circuit.

The PP signal-specific interface circuit 12', the CP signal-specific interface circuit 12", the PP signal-specific control circuit 18' and the CP signal-specific control circuit 18", are configured to be connected to, and controllable by a charging control unit 22. Thereby, the control unit 22 may monitor and control the interface circuit 12, 12', 12" and the control circuit similarly 18, 18', 18", such that a change of a status of a component in the control circuit 18, 18', 18" produces an identical change of status in a corresponding component in the interface circuit 12, 12', 12".

As mentioned above, Fig. 3 shows the communications system 2 (on-board system) for the on-board combined charging system (CCS) 3 of the marine vessel 4. The on-board combined charging system 3 is adapted for the charging of the propulsion electric energy storage system 28 of the marine vessel 4. The on-board communications system 2 comprises an on-board connector 16 for connecting to the on-shore combined charging system (CCS) 3'. The communications system 2 further comprises the communications interface 1 of the first aspect of the disclosure, a control circuit 18, 18', 18" communicatively connected to the galvanic isolation device 14 of the communication interface 2, a charging control unit 22, and a DC electric energy storage system 26.

The connecting node 10 of the communications interface 1 is further configured to be communicatively connected to the on-shore combined charging system (CCS) 3' via the on-board connector 16. The interface circuit 12, 12', 12" and the control circuit 18, 18', 18" are communicatively connected to the connecting node 10 in parallel, and the galvanic isolation device 14 is connected in series with the control circuit 18, 18', 18", between the connecting node 10 and the control circuit 18, 18', 18", galvanically isolating the control circuit 18, 18', 18" from the interface circuit 12, 12', 12", the connecting node 10 and the on-board connector 16.

The charging control unit 22 may be an electronic control unit (ECU) of the marine vessel 4. The charging control unit 22 may comprise the control circuit 18, 18', 18".

The DC electric energy storage system 26 may be a 24 volts or 12 volts battery for powering consumers of low-voltage electric power, such as the charging control unit 22. The DC electric energy storage system 26 is different from the propulsion electric energy storage system 28. The DC electric energy storage system 26 is electrically connected to the charging control unit 22, which communicates the PP, CP and PE control signals with the on-shore CCS 3'. The control signals use ground (GND) of the DC electric energy storage system 26 as a reference for the control signals. Therefore, ground needs to be connected to the PE control signal. As mentioned hereinabove, such a connection may cause problems in marine applications because of the existence of corrosion protection arrangements 30, which either obstructs the CP and PP control signals' return path, or which causes the PE control signal to differ from the ground (GND) signal of the DC electric energy storage system.

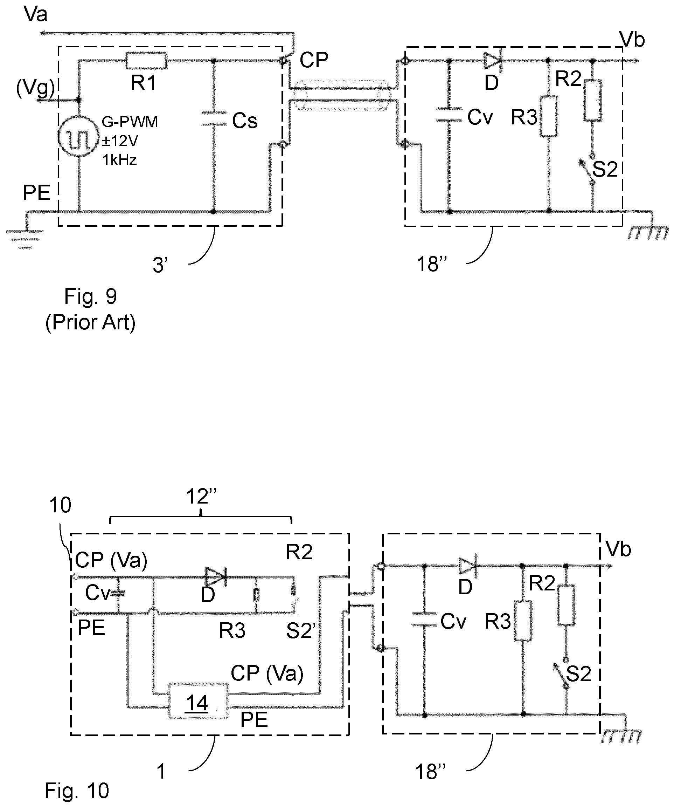

As will be explained in conjunction with **Figs 4-10****,** the charging control unit 22 is configured to replicate a status change of the control circuit 18, 18', 18" in the interface circuit 12, 12', 12". The charging control unit 22 may be configured to monitor and control a process for charging the propulsion electric energy storage system 28. The charging control unit 22 may thus monitor connections of hardware, signals, state of charge of the propulsion electric energy storage system, etc. To communicate with the on-shore CCS 3', the charging control unit may be configured to control components of the control circuit 18, 18', 18", such as electric switches S2, S2' (**Fig. 10**), to indicating a change of status of the charging process by changing a status of the control circuit 18, 18', 18". In the present disclosure, a change of status implemented by the charging control unit 22 in the control circuit 18, 18', 18" is also implemented in the interface circuit by the charging control unit 12, 12', 12". Thereby, the on-shore CCS 3', monitoring the charging process of the on-board CCS 3, would detect a status change in the interface circuit 12, 12', 12" coupled in parallel with the control circuit18, 18', 18". The status change in the interface circuit 12, 12', 12" would be unaffected by any corrosion protection arrangements 30 and would provide the correct control signals (PP, CP and PE) to allow the charging process to be carried out.

The charging control unit 22 may be connected to, and electrically powered by the DC electric energy storage system 26.

**Fig. 4** shows an on-shore CCS 3' connected to an on-board CCS 3 of a marine vessel which lacks a corrosion protection arrangement 30. The control signals PP, CP and PE are provided to control circuits (not shown) which may be comprised in the charging control unit 22. A response of the control signals is returned to the on-shore CCS 3' via a bus bar 32 connected to the marine vessel's hull, thereby providing a ground reference. Ground of the DC electric energy storage system 26 is also connected to the bus bar 32. Thereby, the PP and CP signals are returned correctly to the on-shore CCS 3' and the PE signal is equal to the ground (GND) of the DC electric energy storage system. Consequently, the requirements of the CCS 3, 3' are fulfilled and charging of the propulsion electric energy storage system 28 could be carried out. However, the illustrated system would lead to stray currents between the hull and the shore, which would lead to corrosion. Therefore, corrosion protection arrangements 30, as shown in **Figs 5-6** are generally applied to marine vessels.

**Fig. 5a** shows a marine vessel applying a corrosion protection arrangement 30 in the form of a galvanic isolator or an isolation transformer between the grounded hull and the on-shore CCS 3' to block stray currents causing corrosion. In the case of **Fig. 5a****,** the corrosion protection arrangement 30 blocks the return path of the PP and CP control signals such that charging cannot take place. In the case of **Fig. 5b****,** the PP and CP control signal lines bypass the corrosion protection arrangement 30. However, ground (GND) of the DC electric energy storage system 26, i.e. ground of the charging control unit 22, will not be equal to the protected earth PE control signal, because ground (GND) cannot bypass the corrosion protection arrangement 30 without generating stray currents and corrosion.

**Fig. 6** shows a corrosion protection arrangement which is common in commercial marine vessels, where the ground (GND) of the DC electric energy storage system 26 is separated from the hull of the vessel. Also in this case, charging via a CCS 3, 3' would encounter problems because ground (GND) of the DC electric energy storage system 26, i.e. ground of the charging control unit 22, will not be equal to the protected earth PE control signal.

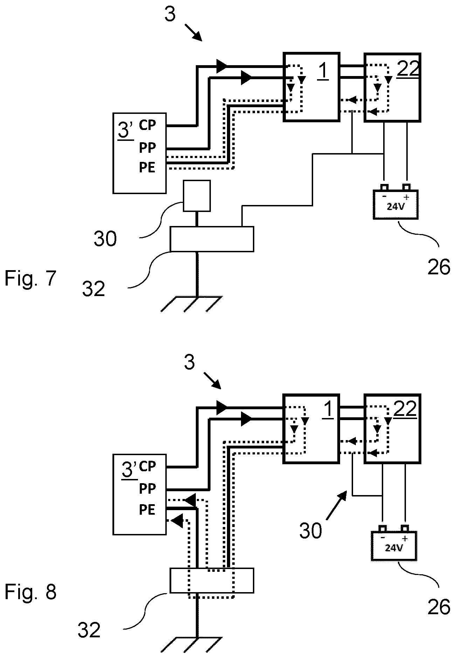

**Fig. 7** and **Fig. 8** conceptually illustrate how the interface circuit 1 of the present disclosure is applied to the marine vessels of **Fig. 5a, Fig. 5b** and **Fig. 6****,** i.e. to marine vessels having corrosion protection arrangements 30. As shown, the interface circuit 1 returns the PP, CP and PE control signals as "expected" by the on-shore CCS 3'. This is achieved by galvanically isolating the control circuit 18, 18', 18" of the charging control unit 22. Thereby, the charging control unit may control the interface circuit 12, 12', 12" to provide the correct return signals, depending on the status of the on-board system.

**Fig. 9** shows a schematic example of a CP/PE circuit of an on-shore CCS 3' connected to a CP control circuit comprising a PE reference circuit in a manner which would prevent the charging process from being carried if a corrosion protection arrangement 30 (not shown) would be present.

**Fig. 10** shows how a CP interface circuit 12" is connected in parallel to the CP control circuit 18" of **Fig. 9** via the galvanic isolation device 14. **Fig. 10** also shows how the CP interface circuit 12" is schematically identical to the CP control circuit 18". The charging control unit 22 may thereby control e.g. switch S2, S2' simultaneously such that the on-shore CCS 3' would read the CP response signal from the CP interface circuit 12" as if it was provided by the CP control circuit 18".

The terminology used herein is for the purpose of describing particular aspects only and is not intended to be limiting of the disclosure. As used herein, the singular forms "a", "an" and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A communications interface (1) for relaying communications signals to and from an on-board combined charging system (CCS) (3), the communications interface (1) being configured to be electrically connectable between an on-shore combined charging system (CCS) (3') and the on-board combined charging system (CCS) (3), the communications interface (1) comprising:
- a connecting node (10),
- an interface circuit (12, 12', 12"), and
- a galvanic isolation device (14),
wherein the interface circuit (12) and the galvanic isolation device (14) are electrically connected in parallel to the connecting node (10), the connecting node further being configured to be communicatively connected to the on-shore combined charging system (CCS) (3') via an on-board connector (16), and wherein the galvanic isolation device (14) is further configured to be communicatively connected to a control circuit (18, 18', 18") of a communications system (2) of the on-board combined charging system (CCS) (3) such that the control circuit (18, 18', 18") of the communications system (2) is galvanically isolated from both the interface circuit (12) and the connecting node (10) by the galvanic isolation device (14).

2. The communications interface (1) of claim 1, wherein the interface circuit (12, 12', 12") comprises at least a proximity pilot (PP) signal-specific interface circuit (12') and/or a control pilot (CP) signal-specific interface circuit (12") and wherein the proximity pilot (PP) signal-specific interface circuit (12') is configured to be connected in parallel with a proximity pilot (PP) signal-specific control circuit (18') of the communications system (2) via the galvanic isolation device (14), and/or the control pilot (CP) signal-specific interface circuit (12") is configured to be connected in parallel with a control pilot (CP) signal-specific control circuit (18") of the communications system (2) via the galvanic isolation device (14).

3. The communications interface (1) of claim 2, wherein each of the proximity pilot (PP) signal-specific interface circuit (12'), the control pilot (CP) signal-specific interface circuit (12"), the proximity pilot (PP) signal-specific control circuit (18') and the control pilot (CP) signal-specific control circuit (18") comprises a protected earth (PE) reference circuit (20', 20", 20‴, 20ʺʺ).

4. The communications interface (1) of claim 2 or 3, wherein the proximity pilot (PP) signal-specific interface circuit (12') is configured to be schematically identical to the proximity pilot (PP) signal-specific control circuit (18'), and wherein the control pilot (CP) signal-specific interface circuit (12") is configured to be schematically identical to the control pilot (CP) signal-specific control circuit (18").

5. The communications interface (1) of any one of claims 2-4, wherein the proximity pilot (PP) signal-specific interface circuit (12'), the control pilot (CP) signal-specific interface circuit (12"), the proximity pilot (PP) signal-specific control circuit (18') and the control pilot (CP) signal-specific control circuit (18"), are configured to be connected to, and controllable by a charging control unit (22).

6. An on-board communications system (2) for an on-board combined charging system (CCS) (3) of a marine vessel (4), for charging of a propulsion electric energy storage system (24), the on-board communications system (2) comprising:
- an on-board connector (16) for connecting to an on-shore combined charging system (CCS) (3'),
- the communications interface (1) of any one of claims 1-5,
- a control circuit (18, 18', 18") communicatively connected to the galvanic isolation device (14) of the communication interface,
- a charging control unit (22), and
- a DC electric energy storage system (26),
wherein the connecting node (10) of the communications interface (1) is further configured to be communicatively connected to an on-shore combined charging system (CCS) (3') via the on-board connector (16), the interface circuit (12, 12', 12") and the control circuit (18, 18', 18") being communicatively connected to the connecting node (10) in parallel, and wherein the galvanic isolation device (14) is connected in series with the control circuit (18, 18', 18"), between the connecting node (10) and the control circuit (18, 18', 18"), galvanically isolating the control circuit (18, 18', 18") from the interface circuit (12, 12', 12"), the connecting node (10) and the on-board connector (26).

7. The on-board communications system (2) of claim 6, wherein the interface circuit (12, 12', 12") comprises at least a proximity pilot (PP) signal-specific interface circuit (12') and/or a control pilot (CP) signal-specific interface circuit (12") and wherein the proximity pilot (PP) signal-specific interface circuit (12') is connected in parallel with a proximity pilot (PP) signal-specific control circuit (18') via the galvanic isolation device (14), and/or the control pilot (CP) signal-specific interface circuit (12") is connected in parallel with a control pilot (CP) signal-specific control circuit (18") via the galvanic isolation device (14).

8. The on-board communications system (2) of claim 7, wherein each of the proximity pilot (PP) signal-specific interface circuit (12'), the control pilot (CP) signal-specific interface circuit (12"), the proximity pilot (PP) signal-specific control circuit (18') and the control pilot (CP) signal-specific control circuit (18") comprises a protected earth (PE) reference circuit (20', 20", 20'", 20" ").

9. The on-board communications system (2) of any one of claims 7-8, wherein the proximity pilot (PP) signal-specific interface circuit (12') is configured to be schematically identical to the proximity pilot (PP) signal-specific control circuit (18'), and wherein the control pilot (CP) signal-specific interface circuit (12") is configured to be schematically identical to the control pilot (CP) signal-specific control circuit (18").

10. The on-board communications system (2) of any one of claims 6-9, wherein the proximity pilot (PP) signal-specific interface circuit (12'), the control pilot (CP) signal-specific interface circuit (12"), the proximity pilot (PP) signal-specific control circuit (18') and the control pilot (CP) signal-specific control circuit (18"), are connected to, and controllable by the charging control unit (22), and wherein the interface circuit (12, 12', 12") is communicatively connected to, but galvanically isolated from the charging control unit (22) by the galvanic isolation device (14).

11. The on-board communications system (2) of claim 10, wherein the charging control unit (22) is configured to replicate a status change of the control circuit (18, 18', 18") in the interface circuit.

12. The on-board communications system (2) of any one of claims 6-11, wherein the charging control unit (22) is connected to, and electrically powered by the DC electric energy storage system (26).

13. An on-board combined charging system (CCS) (3) for charging a propulsion electric energy storage system (28), the on-board combined charging system (3) comprising the on-board communications system (2) of any one of claims 6-12.

14. A marine vessel (4) comprising:
- the on-board combined charging system (CCS) (3) of claim 13,
- a propulsion electric energy storage system (28) connected to the on-board combined charging system (CCS) (3),
- a corrosion protection arrangement (30), and
wherein the corrosion protection arrangement (30) is configured to be galvanically isolated from an on-shore combined charging system (CCS) (3') when the connecting node (10) of the communications interface (1) is communicatively connected to the on-shore combined charging system (CCS).
